# FASCICULE DE BREVET EUROPEEN

(11) **EP 0 701 480 B1**
(45) Date de publication et mention de la délivrance du brevet: **08.09.1999**
(21) Numéro de dépôt: 95914399.1
(22) Date de dépôt: 22.03.1995
(51) Int. Cl.: B01J 35/10, B01J 21/12, B01J 23/40

(54) **CATALYSEUR A BASE DE METAL NOBLE ET SILICE-ALUMINE ET PROCEDE DE TRAITEMENT AVEC HYDROISOMERISATION DE CHARGES LOURDES**
EDELMETALL UND SILICA-ALUMINA ENTHALTENDER KATALYSATOR UND VERFAHREN ZUR BEHANDLUNGVON SCHWEREN KOHLENWASSERSTOFFBESCHICHTINGEN MIT HYDROISOMERISATION
NOBLE METAL- AND SILICA/ALUMINA-BASED CATALYST AND METHOD FOR THE HYDROISOMERISATION PROCESSING OF HEAVY FEEDSTOCKS

(30) Priorité: 01.04.1994 FR 9403866; 01.04.1994 FR 9403867
(43) Date de publication de la demande: 20.03.1996
(73) Titulaire: INSTITUT FRANCAIS DU PETROLE, 92506 Rueil-Malmaison Cédex (FR)
(72) Inventeur: MIGNARD, Samuel, F-78400 Chatou (FR); MARCHAL, Nathalie, F-75005 Paris (FR); KASZTELAN, Slavik, F-92500 Rueil-Malmaison (FR); BIGEARD, P.H., F-38200 Vienne (FR); BILLON, Alain, F-78110 Le Vésinet (FR)
(74) Mandataire: Andreeff, François
(86) Numéro de dépôt international: FR9500352
(87) Numéro de publication internationale: WO9526819

(56) Documents cités:
- EP-A- 0 131 925
- EP-A- 0 160 475
- EP-A- 0 533 451
- FR-A- 2 563 120
- FR-A- 2 565 504

## Description

La présente invention concerne un catalyseur utilisé dans les procédés d'hydroconversion de charges qui ont des teneurs réduites en métaux.

La présente invention concerne également un procédé d'hydroconversion avec hydroisomérisation de charges dont les points d'ébullition sont essentiellement compris au-delà de 350°C et qui ont des teneurs réduites en métaux. Une demande européenne 95914400,7 (EP-A-0725810; WO-A-9527020) a également été déposée le même jour que la présente demande et pour l'hydroisomérisation de charges issues du procédé Fischer-Tropsch; cette demande n'est pas opposable à le présente demande.

Il est particulièrement avantageux pour le traitement avec hydroisomérisation de charges (telles que les résidus d'hydrocracking) pour obtenir des produits de très haute valeur ajouté tels que kérosène, gas-oils et huiles de base.

Divers catalyseurs peuvent être utilisés pour réaliser la réaction d'hydroisomérisation. Par exemple, le brevet américain US-4,929,795 décrit l'utilisation d'un catalyseur composé de 0,6% poids de platine déposé sur une alumine halogénée contenant 7,2% poids de fluor pour obtenir des huiles de base à partir de paraffines. La demanderesse a cherché un catalyseur sans halogène utilisable dans un procédé plus simple car le catalyseur ainsi décrit nécessite une injection en continu de composé fluoré dans l'unité catalytique.

Le brevet américain US-A-4,428,819 décrit lui un catalyseur contenant une zéolithe utilisé pour réaliser la réaction d'isomérisation d'un mélange de paraffines issues du pétrole et mélangée à une huile de base obtenue par déparaffinage catalytique dans le but d'en améliorer le point de trouble. Enfin, le brevet américain US-A-4,547,283 décrit un catalyseur d'hydroisomérisation de paraffines issues du pétrole contenant au moins un métal actif du groupe 2a, 3a, 4a et/ou 4b du tableau périodique des éléments et dont le support est de préférence une silice.

La demanderesse a cherché un catalyseur plus simple de mise en oeuvre en évitant l'utilisation de la zéolithe ou l'addition d'éléments supplémentaires lors de la fabrication du catalyseur.

Tous les catalyseurs utilisés actuellement en hydroconversion sont du type bifonctionnels associant une fonction acide à une fonction hydrogénante. La fonction acide est apportée par des supports de grandes surfaces (150 à 800 m².g⁻¹ généralement) présentant une acidité superficielle, telles que les alumines halogénées (chlorées ou fluorées notamment), les alumines phosphorées, les combinaisons d'oxydes de bore et d'aluminium, les silices-alumines amorphes et les silice-alumines. La fonction hydrogénante est apportée soit par un ou plusieurs métaux du groupe VIII de la classification périodique des éléments, tels que fer, cobalt, nickel, ruthénium, rhodium, palladium, osmium, iridium et platine, soit par une association d'au moins un métal du groupe VI tels que chrome, molybdène et tungstène et au moins un métal du groupe VIII.

On connaît la demande de brevet européen EP-A-0533451 qui décrit un catalyseur contenant notamment un métal du groupe VIII (noble ou non noble), un support contenant de l'alumine ou de la silice-alumine, la teneur en Si étant alors inférieure à 35 % en poids par rapport au poids total du support, au moins environ 0,5 % du poids de Si autre que la silice entrant dans la composition du support comme agent modificateur de surface, et qui présente une surface B.E.T. d'environ 180 à 400 m²/g. Par ailleurs, ce catalyseur peut contenir un métal du groupe VI.

L'équilibre entre les deux fonctions acide et hydrogénante est le paramètre fondamental qui régit l'activité et la sélectivité du catalyseur. Une fonction acide faible et une fonction hydrogénante forte donnent des catalyseurs peu actifs et sélectifs envers l'isomérisation alors qu'une fonction acide forte et une fonction hydrogénante faible donnent des catalyseurs très actifs et sélectifs envers le craquage. Une troisième possibilité est d'utiliser une fonction acide forte et une fonction hydrogénante forte afin d'obtenir un catalyseur très actif mais également très sélectif envers l'isomérisation. Il est donc possible, en choisissant judicieusement chacune des fonctions d'ajuster le couple activité/sélectivité du catalyseur.

Les travaux de recherche effectués par la demanderesse sur de nombreuses silice-alumines l'ont conduit à découvrir que, de façon surprenante l'utilisation d'un catalyseur comprenant une silice-alumine particulière permet d'obtenir des catalyseurs très actifs mais aussi très sélectifs dans certaines réactions telles que l'isomérisation de charges telles que définies ci-après.

Plus précisément, selon l'invention, le catalyseur est essentiellement constitué de 0,05-10% en poids d'au moins un métal noble du groupe VIII déposé sur un support amorphe de silice-alumine ledit catalyseur ne contenant ni zéolite ni halogène et montrant une teneur constante en silice dans tout le catalyseur, ledit support contient 5-70% en poids de silice et présente une surface spécifique BET de 100-500m²/g et le catalyseur présente :
* un diamètre moyen des pores compris entre 1-12nm,
* un volume poreux des pores dont le diamètre est compris entre le diamètre moyen tel que défini précédemment diminué de 3nm et le diamètre moyen tel que défini précédemment augmenté de 3nm est supérieur à 40% du volume poreux total
* une dispersion du métal noble comprise entre 20-100%,
* un coefficient de répartition du métal noble supérieur à 0,1.

### Ces caractéristiques sont plus en détail :

*Teneur en silice :* le support utilisé pour l'élaboration du catalyseur décrit dans le cadre de ce brevet est composé de silice SiO₂ et d'alumine Al₂O₃. La teneur en silice, exprimé en pourcentage poids, est compris entre 5 et 70 et de manière préférée entre 20 et 60% et de manière encore plus préférée entre 22 et 45. Cette teneur est parfaitement mesurée à l'aide de la fluorescence X. Elle est constante dans tout le catalyseur c'est-à-dire que la concentration en silice n'est pas plus forte à la surface du catalyseur par exemple, le catalyseur est homogène en silice.

*Nature du métal noble :* pour ce type particulier de réaction, la fonction métallique est apportée par un métal noble du groupe VIII de la classification périodique des éléments et plus particulièrement le platine.

*Teneur en métal noble :* la teneur en métal noble, exprimée en % poids de métal par rapport au catalyseur, est comprise entre 0,05 à 10 et plus préférentiellement comprise entre 0,1 et 5.

*Dispersion du métal noble :* la dispersion, représentant la fraction de métal accessible au réactif par rapport à la quantité totale de métal du catalyseur. peut être mesurée, par exemple, par titrage H₂/O₂. Le métal est préalablement réduit c'est-à-dire qu'il subit un traitement sous flux d'hydrogène à haute température dans des conditions telles que tous les atomes de platine accessibles à l'hydrogène soient transformés sous forme métallique. Ensuite, un flux d'oxygène est envoyé dans des conditions opératoires adéquates pour que tous les atomes de platine réduit accessibles à l'oxygène soit oxydés sous forme PtO₂. En calculant la différence entre la quantité d'oxygène introduit et la quantité d'oxygène sortante, on accède à la quantité d'oxygène consommée; ainsi, on peut alors déduire de cette dernière valeur la quantité de platine accessible à l'oxygène. La dispersion est alors égale au rapport quantité de platine accessible à l'oxygène sur quantité totale de platine du catalyseur. Dans notre cas, la dispersion est comprise entre 20% et 100% et de préférence entre 30% et 100%.

*Répartition du métal noble :* la répartition du métal noble représente la distribution du métal à l'intérieur du grain de catalyseur, le métal pouvant être bien ou mal dispersé. Ainsi, il est possible d'obtenir le platine mal réparti (par exemple détecté dans une couronne dont l'épaisseur est nettement inférieure au rayon du grain) mais bien dispersé c'est-à-dire que tous les atomes de platine, situés en couronne, seront accessibles aux réactifs. Dans notre cas, la répartition du platine est bonne c'est-à-dire que le profil du platine, mesuré d'après la méthode de la microsonde de Castaing, présente un coefficient de répartition supérieur à 0,1 et de préférence supérieur à 0,2.

*Surface BET :* la surface BET du support est comprise entre 100m²/g et 500m²/g et de préférence comprise entre 250m²/g et 450m²/g et de manière encore plus préférée entre 310m²/g et 450m²/g.

*Diamètre moyen des pores* : le diamètre moyen des pores du catalyseur est mesuré à partir du profil de répartition poreuse obtenu à l'aide d'un porosimètre au mercure. Le diamètre moyen des pores est défini comme étant le diamètre correspondant à l'annulation de la courbe dérivée obtenue à partir de la courbe de porosité au mercure. Le diamètre moyen des pores, ainsi défini, est compris entre 1nm (1*10-9mètre) et 12nm (12*10-9mètre) et de préférence compris entre 2,5nm (2,5*10-9mètre) et 11nm (11*10-9mètre) et de manière encore plus préférée entre 4nm (4*10-9mètre) et 10,5nm (10,5*10-9mètre), et de façon avantageuse entre 3 et 9 nm.

*Répartition poreuse* : le catalyseur dont il est question dans ce brevet a une répartition poreuse telle que le volume poreux des pores dont le diamètre est compris entre le diamètre moyen tel que défini précédemment diminué de 3nm et le diamètre moyen tel que défini précédemment augmenté de 3nm (soit le diamètre moyen ± 3nm) est supérieur à 40% du volume poreux total et de manière préférée compris entre 50% et 90% du volume poreux total et plus avantageusement encore entre 50% et 80% du volume poreux total et mieux entre 50% et 70% du volume poreux total. Le catalyseur présente donc une répartition poreuse uniforme, de type monomodal plutôt que bimodal.

*Volume poreux global du support :* il est généralement inférieur à 1,0ml/g et de préférence compris entre 0,3 et 0,9ml/g et encore plus avantageusement inférieur à 0,85ml/g. D'une façon générale, le support présente un volume poreux global de plus de 0,55 ml/g et mieux d'au moins 0,6 ml/g.

La préparation et la mise en forme de la silice-alumine est faite par des méthodes usuelles bien connues de l'homme de l'art. De façon avantageuse, préalablement à l'imprégnation du métal, le support pourra subir une calcination comme par exemple un traitement thermique à 300-750°C (600°C préféré) pendant 0,25-10 heures (2 heures préféré) sous 2-30% volume de vapeur d'eau (7,5% préféré).

Le sel de métal est introduit par une des méthodes usuelles utilisées pour déposer le métal (de préférence du platine) à la surface d'un support. Une des méthodes préférées est l'imprégnation à sec qui consiste en l'introduction du sel de métal dans un volume de solution qui est égal au volume poreux de la masse de catalyseur à imprégner. Avant l'opération de réduction, le catalyseur pourra subir une calcination comme par exemple un traitement sous air sec à 300-750°C (520°C préféré) pendant 0,25-10 heures (2 heures préféré).
Avant utilisation dans la réaction de conversion, le métal contenu dans le catalyseur doit être réduit. Une des méthodes préférées pour conduire la réduction du métal est le traitement sous hydrogène à une température comprise entre 150°C et 650°C et une pression totale comprise entre 0,1 et 25MPa. Par exemple, une réduction consiste en un palier à 150°C de 2 heures puis une montée en température jusqu'à 450°C à la vitesse de 1°C/min puis un palier de 2 heures à 450°C ; durant toute cette étape de réduction, le débit d'hydrogène est de 1000lhydrogène/lcatalyseur. Notons également que toute méthode de réduction ex-situ est convenable.

Le catalyseur tel qu'il est décrit est actif par exemple pour l'hydroisomérisation des charges telles que décrites ci-après afin d'obtenir une quantité importante de produits résultants de l'hydroisomérisation des molécules présentes dans la charge de départ. En particulier, il est intéressant d'obtenir des produits pouvant ensuite être utilisés comme composants de produits de lubrification.

Toutes les charges propres peuvent être traitées comme par exemple les distillats sous vide, résidu sous vide, résidu atmosphérique ou les produits paraffiniques issus du déparaffinage d'une charge pétrolière et par exemple lorsque la charge est un résidu sous vide désasphalté. Ces charges contiennent des molécules avec au moins environ 10 atomes de carbone. Elles peuvent contenir des fragments paraffiniques ou être des molécules entièrement paraffiniques, et la teneur en atomes de carbone aromatiques est d'au plus 20% en poids de la totalité des atomes de carbone de la charge. Nous entendons par charge propre les charges dont la teneur en soufre est inférieure à 1000ppm poids et de préférence inférieure à 500 ppm poids et de façon encore plus préférée inférieure à 300ppm poids et la teneur en azote inférieure à 200ppm poids et de préférence inférieure à 100ppm poids et de manière encore plus préférée inférieure à 50ppm poids. La teneur en métaux, de la charge tels que nickel et vanadium est extrêmement réduite c'est-à-dire inférieure à 50ppm poids et de manière plus avantageuse inférieure à 10ppm poids.

De préférence, sont traitées en hydroisomérisation des charges lourdes telles que les résidus d'hydrocracking, c'est-à-dire qui présentent des points d'ébullition essentiellement supérieurs à 350°C. Ces charges contiennent des molécules avec au moins environ 20 atomes de carbone ayant des fragments paraffiniques ou étant des molécules entièrement paraffiniques. L'hydroisomérisation concerne essentiellement des paraffines et essentiellement les n-paraffines et conduit alors à des produits isoparaffiniques.

Les conditions opératoires utilisées pour cette réaction d'hydroisomérisation sont une température de 200°C à 450°C et préférentiellement de 250°C à 430°C et avantageusement supérieure à 340°C une pression partielle d'hydrogène de 2MPa à 25MPa et préférentiellement comprise entre 3MPa et 20MPa, une vitesse volumique horaire comprise entre 0,1 et 10 h⁻¹ et préférentiellement comprise entre 0,2 et 2 h⁻¹ et un faux d'hydrogène compris entre 100 et 2000 litre d'hydrogène par litre de charge et préférentiellement entre 150 et 1500 litre d'hydrogène par litre de charge.

L'utilisation de ce catalyseur n'est pas limitée à l'hydroisomérisation, mais de façon plus générale, il convient pour la conversion des hydrocarbures, utilisé dans les conditions nécessaires pour obtenir ladite conversion recherchée.

### EXEMPLE

L'exemple présenté ci-après illustre les caractéristiques de l'invention sans toutefois en limiter la portée.

### Préparation du catalyseur :

Le support est une silice-alumine utilisée sous forme d'extrudés. Elle contient 29,1% poids de silice SiO₂ et 70,9% poids d'alumine Al₂O₃. La silice-alumine, avant ajout du métal noble, présente une surface de 389m²/g et un diamètre moyen des pores de 6,6nm. Le volume poreux total du support est de 0,76 ml/g.

Le catalyseur correspondant est obtenu après imprégnation du métal noble sur le support. Le sel de platine Pt(NH₃)4Cl₂ est dissous dans un volume de solution correspondant au volume poreux total à imprégner. Le solide est ensuite calciné pendant 2 heures sous air sec à 520°C. La teneur en platine est de 0,60%poids. La dispersion du Pt est égale à 60% et sa répartition est uniforme dans le grain. Mesurés sur le catalyseur, le volume poreux est égal à 0,75 ml/g, la surface BET égale à 332m²/g et le diamètre moyen des pores de 6,5nm et le volume poreux correspondant au pores dont le diamètre est compris entre 3,5nm et 9,5nm est de 0,46 ml/g soit 59% du volume poreux total.

### La répartition poreuse de ce catalyseur est la suivante :

| | | | |
|---|---|---|---|
| pores de diamètre | <6 nm | volume poreux = | 0,16 ml/g soit 21% du total. |
| | 6-15 nm | | 0,36 ml/g soit 48%. |
| | 15-60 nm | | 0,06 ml/g soit 8%. |
| | >60 nm | | 0,17 ml/g soit 23%. |

### Caractéristiques de la charge :

Dans le tableau ci-dessous, nous avons reporté les caractéristiques physico-chimiques de la charge utilisée pour la réaction d'hydroisomérisation. C'est un résidu d'hydrocraquage issu d'une coupe distillée sous vide.

| | |
|---|---|
| d154 | 0,859 |
| Soufre (wt%) | 0,0012 |
| azote (ppm pds) | 1,8 |
| point d'écoulement | +30°C |
| PI | 304 |
| 5% | 327 |
| 10% | 385 |
| 50% | 452 |
| 90% | 519 |
| 95% | 536 |
| PF | 573 |

### Obtention de l'huile de base après réaction :

Le catalyseur dont la préparation vient d'être décrit a été utilisé pour la préparation d'huile de base par l'hydroisomérisation de la charge décrite.

La réaction a eu lieu à 355°C, sous une pression totale de 12MPa, une vitesse volumique horaire de 1h⁻¹ et un débit d'hydrogène de 1000lhydrogène/lcharge. Dans ces conditions opératoires, la conversion nette en 400- est de 55% poids et le rendement en huile de base est de 85% poids. L'huile récupérée a un VI égal à 135.

Dans le tableau suivant, nous avons comparé les caractéristiques de l'huile après hydroisomérisation à celles de l'huile extraite du résidu d'hydrocraquage par la méthode classique d'extraction au solvant (MEK/Tol). On remarque que ces deux huiles sont très proches au niveau densité et viscosité. Par contre, les VI, point d'écoulement et surtout rendement huile/résidu sont meilleurs dans le cas du produit hydroisomérisé.

| | déparaffinage par solvant | Hidroisomérisation |
|---|---|---|
| d15/4 | 0,842 | 0,840 |
| v(100°C) (m²/s) | 5,0 x 10⁻⁶ | 4,9 x 10⁻⁶ |
| VI | 125 | 135 |
| Point d'écoulement (°C) | -15 | -18 |
| Rendement huile/résidu (% poids) | 78 | 88,5 |

## Revendications

1. Catalyseur essentiellement constitué de 0,05-10% en poids d'au moins un métal noble du groupe VIII déposé sur un support amorphe de silice-alumine, ledit catalyseur ne contenant ni zéolite ni halogène, et montrant une teneur constante en silice dans tout le catalyseur, caractérisé en ce que ledit support contient 5-70% en poids de silice et présente une surface spécifique BET de 100-500nm²/g et que le catalyseur présente :
* un diamètre moyen des pores compris entre 1-12nm,
* un volume poreux des pores dont le diamètre est compris entre le diamètre moyen diminué de 3nm et le diamètre moyen augmenté de 3nm supérieur à 40% du volume poreux total,
* une dispersion du métal noble comprise entre 20-100%,
* un coefficient de répartition du métal noble supérieur à 0,1.

2. Catalyseur selon la revendication 1, caractérisé en ce que le volume poreux global du support est inférieur à 1,0ml/g.

3. Catalyseur selon l'une des revendications précédentes, caractérisé en ce que le support présente un volume poreux global d'au moins 0,3ml/g et inférieur à 0,9ml/g.

4. Catalyseur selon l'une des revendications précédentes, caractérisé en ce que le support présente un volume poreux global inférieur à 0,85 ml/g.

5. Catalyseur selon l'une des revendications précédentes, caractérisé en ce qu'il présente un diamètre moyen des pores compris entre 2,5 et 11nm.

6. Catalyseur selon l'une des revendications précédentes, caractérisé en ce qu'il présente un diamètre moyen des pores compris entre 4 et 10,5nm.

7. Catalyseur selon l'une des revendications précédentes, caractérisé en ce que le volume poreux des pores dont le diamètre est compris entre le diamètre moyen diminué de 3nm et le diamètre moyen augmenté de 3nm est compris entre 50 et 90% du volume poreux total.

8. Catalyseur selon l'une des revendications précédentes, caractérisé en ce que le volume poreux des pores dont le diamètre est compris entre le diamètre moyen diminué de 3nm et le diamètre moyen augmenté de 3nm est compris entre 50 et 80% du volume poreux total.

9. Catalyseur selon l'une des revendications précédentes, caractérisé en ce que le volume poreux des pores dont le diamètre est compris entre le diamètre moyen diminué de 3nm et le diamètre moyen augmenté de 3nm est compris entre 50 et 70% du volume poreux total.

10. Catalyseur selon l'une des revendications précédentes, caractérisé en ce que le support contient 20-60% en poids de silice.

11. Catalyseur selon l'une des revendications précédentes, caractérisé en ce que le support contient 22-45% en poids de silice.

12. Catalyseur selon l'une des revendications précédentes, caractérisé en ce que le support présente une surface BET comprise entre 250 et 450 m²/g.

13. Catalyseur selon l'une des revendications précédentes, caractérisé en ce que le support présente une surface BET comprise entre 310 et 450 m²/g.

14. Catalyseur selon l'une des revendications précédentes, caractérisé en ce que le métal noble est le platine.

15. Procédé de traitement avec hydroisomérisation de coupes pétrolières lourdes hydrocarbonées à points d'ébullition essentiellement supérieurs à 350°C, dont la teneur en azote inférieure à 200 ppm poids et la teneur en métaux inférieure à 50 ppm poids, ledit procédé étant caractérisé en ce que il opère à une température de 200-450°C, sous une pression partielle d'hydrogène de 2-25 MPa, avec une vitesse volumique horaire de 0,1-10 h⁻¹ et un taux volumique hydrogène/charge de 100-2000, avec un catalyseur selon l'une des revendications 1 à 14.

## Claims

1. A catalyst essentially constituted by 0.05-10% by weight of at least one precious metal from group VIII deposited on an amorphous silica-alumina support, said catalyst containing nether zeolite nor halogen, and having a constant silica content, in the whole of the calalyst , characterised in that said support contains 5-70 % by weight or silica and has a BET specific surface area of 100-500 m²/g, the catalyst having:
- an average pore diameter of between 1-12 nm,
- a pore volume of pores with diameters between the average diameter reduced by 3 nm and the average diameter increased by 3 nm, of more than 40% of the total pore volume,
- a precious metal dispersion of between 20-100%,
- a distribution coefficient for the precious metal of more than 0.1.

2. A catalyst according to claim 1, characterized in that the total pore volume of the support is less than 1.0 ml/g.

3. A catalyst according to claim 1 or claim 2, characterised in that the support has a total pore volume of at least 0.3 ml/g and below 0.9 ml/g.

4. A catalyst according to any one of the preceding claims, characterized in that the support has a total pore volume of below 0.85 ml/g.

5. A catalyst according to any one of the preceding claims, characterized in that the average pore diameter is between 2.5 and 11 nm.

6. A catalyst according to any one of the preceding claims, characterized in that the average pore diameter is between 4 and 10.5 nm.

7. A catalyst according to any one of the preceding claims, characterized in that the pore volume of pores with diameters between the average diameter reduced by 3 nm and the average diameter increased by 3 nm is between 50% and 90% of the total pore volume.

8. A catalyst according to any one of the preceding claims, characterized in that the pore volume of pores with diameters between the average diameter reduced by 3 nm and the average diameter increased by 3 nm is between 50% and 80% of the total pore volume.

9. A catalyst according to any one of the preceding claims, characterized in that the pore volume of pores with diameters between the average diameter reduced by 3 nm and the average diameter increased by 3 nm is between 50% and 70% of the total pore volume.

10. A catalyst according to any one of the preceding claims, characterized in that the support contains 20-60% by weight of silica.

11. A catalyst according to any one of the preceding claims, characterized in that the support contains 22-45% by weight of silica.

12. A catalyst according to any one of the preceding claims, characterized in that the support has a BET surface area of between 250 and 450 m²/g.

13. A catalyst according to any one of the preceding claims, characterised in that the support has a BET surface area of between 310 and 450 m²/g.

14. A catalyst according to any one of the preceding claims, characterised in that the precious metal is platinum.

15. A process for the hydroisomerisation treatment of heavy petroleum cuts with boiling points of essentially greater than 350°C, with a nitrogen content of less than 200 ppm by weight and a metal content of less than 50 ppm by weight, said process being characterised in that it is operated at a temperature of 200-450°C, at a partial pressure of hydrogen of 2-25 MPa, at an hourly space velocity of 0.1-10 h⁻¹ and a hydrogen/feed volume ratio of 100-2000, using a catalyst according to any one of claims 1 to 14.

## Patentansprüche

1. Katalysator, im wesentlichen bestehend aus 0,05-10 Gew.% wenigstens eines Edelmetalls der Gruppe VIII, abgeschieden auf einem amorphen Silizium(di)oxid-Aluminiumoxid-Träger, wobei der Katalysator weder Zeolith noch Halogen enthält und einen konstanten Gehalt an Silizium(di)oxid im gesamten Katalysator zeigt, dadurch gekennzeichnet, daß dieser Träger 5-70 Gew.% Silizium(di)oxid enthält und eine spezifische Oberfläche BET von 100-500 m²/g aufweist und der Katalysator besitzt:
* einen mittleren Porendurchmesser zwischen 1-12 nm,
* ein Porenvolumen der Poren, dessen Durchmesser zwischen dem mittleren Durchmesser vermindert um 3 nm und dem mittleren Durchmesser erhöht um 3 nm mehr als 40 % des Porengesamtvolumens ausmacht,
* eine Dispersion des Edelmetalls zwischen 20-100 % und
* ein Verteilungskoeffizient des Edelmetalls von mehr als 0,1.

2. Katalysator nach Anspruch 1, dadurch gekennzeichnet, daß das Porengesamtvolumen des Trägers kleiner als 1,0 ml/g ist.

3. Katalysator nach einem der vorhergehenden Ansprüche, dadurch gekennzeichnet, daß der Träger ein Porengesamtvolumen von wenigstens 0,3 ml/g und weniger als 0,9 ml/g besitzt.

4. Katalysator nach einem der vorhergehenden Ansprüche, dadurch gekennzeichnet, daß der Träger ein Porengesamtvolumen von weniger als 0,85 ml/g besitzt.

5. Katalysator nach einem der vorhergehenden Ansprüche, dadurch gekennzeichnet, daß er einen mittleren Durchmesser der Poren zwischen 2,5 und 11 nm besitzt.

6. Katalysator nach einem der vorhergehenden Ansprüche, dadurch gekennzeichnet, daß er einen mittleren Durchmesser der Poren zwischen 4 und 10,5 nm besitzt.

7. Katalysator nach einem der vorhergehenden Ansprüche, dadurch gekennzeichnet, daß das Porenvolumen der Poren, deren Durchmesser zwischen dem mittleren Durchmesser, vermindert um 3 nm und dem mittleren Durchmesser, erhöht um 3 nm zwischen 50 und 90 % des Porengesamtvolumens beträgt.

8. Katalysator nach einem der vorhergehenden Ansprüche, dadurch gekennzeichnet, daß das Porenvolumen der Poren, deren Durchmesser zwischen dem mittleren Durchmesser, vermindert um 3 nm und dem mittleren Durchmesser, erhöht um 3 nm zwischen 50 und 80 % des Porengesamtvolumens aufweist.

9. Katalysator nach einem der vorhergehenden Ansprüche, dadurch gekennzeichnet, daß das Porenvolumen der Poren, deren Durchmesser zwischen dem mittleren Durchmesser, vermindert und 3 nm und dem mittleren Durchmesser erhöht um 3 nm zwischen 50 und 70 % des Porengesamtvolumens, aufweist.

10. Katalysator nach einem der vorhergehenden Ansprüche, dadurch gekennzeichnet, daß der Träger 20-60 Gew.% an Silizium(di)oxid enthält.

11. Katalysator nach einem der vorhergehenden Ansprüche, dadurch gekennzeichnet, daß der Träger 22-45 Gew.% Silizium(di)oxid enthält.

12. Katalysator nach einem der vorhergehenden Ansprüche, dadurch gekennzeichnet, daß der Träger eine Oberfläche BET zwischen 250 und 450 m²/g besitzt.

13. Katalysator nach einem der vorhergehenden Ansprüche, dadurch gekennzeichnet, daß der Träger eine Oberfläche BET zwischen 310 und 450 m²/g aufweist,

14. Katalysator nach einem der vorhergehenden Ansprüche, dadurch gekennzeichnet, daß das Edelmetall Platin ist.

15. Verfahren zur Behandlung unter Hydroisomerierung schwerer kohlenwasserstoffhaltiger Erdölfraktionen mit Siedepunkten, die im wesentlichen oberhalb 350°C liegen, deren Stickstoffgehalt unter 200 ppm Gewicht und der Metallgehalt unter 50 ppm Gewicht liegt, wobei das Verfahren sich dadurch auszeichnet, daß es bei einer Temperatur zwischen 200-450 °C unter einem Wasserstoffpartialdruck von 2-25 MPa mit einer stündlichen Volumengeschwindigkeit von 0,1-10 h⁻¹ und einem Volumenverhältnis Wasserstoff/Charge von 100-2000 mit einem Katalysator nach einem der Ansprüche 1 bis 14 betrieben wird.
